**Europäisches Patentamt**

**European Patent Office**

**Office européen des brevets**

(19)

(11) Numéro de publication : **0 161 993**
**B1**

(12) # FASCICULE DE BREVET EUROPÉEN

(45) Date de publication du fascicule du brevet :
**20.01.88**

(51) Int. Cl.⁴ : **B 64 C 27/00**, B 64 D 45/02

(21) Numéro de dépôt : **85400970.1**

(22) Date de dépôt : **15.05.85**

(54) **Procédé et dispositif pour annuler le potentiel électrostatique d'un hélicoptère par rapport à la terre.**

(30) Priorité : **16.05.84 FR 8407607**

(43) Date de publication de la demande :
**21.11.85 Bulletin 85/47**

(45) Mention de la délivrance du brevet :
**20.01.88 Bulletin 88/03**

(84) Etats contractants désignés :
**DE GB**

(56) Documents cités :
**FR-A- 2 025 145**
**US-A- 3 874 616**
**Le dossier contient des informations techniques présentées postérieurement au dépôt de la demande et ne figurant pas dans le présent fascicule.**

(73) Titulaire : **OFFICE NATIONAL D'ETUDES ET DE RECHERCHES AEROSPATIALES(O.N.E.R.A.)**
**29, avenue de la Division Leclerc**
**F-92320 Chatillon (Hauts de Seine) (FR)**

(72) Inventeur : **Taillet, Joseph**
**33, rue de la Tourelle**
**F-92100 Boulogne (FR)**

(74) Mandataire : **Plaçais, Jean-Yves et al**
**Cabinet Netter 40, rue Vignon**
**F-75009 Paris (FR)**

EP 0 161 993 B1

Jouve, 18, rue St-Denis, 75001 Paris, France

## Description

Lors du vol des hélicoptères, et en particulier au cours du vol stationnaire au-dessus de la mer, des terrains arides ou de zones enneigées, la surface de l'hélicoptère, et plus particulièrement sa voilure tournante, est soumise à l'impact de poussières, d'embruns ou de particules de glace qui apportent une charge électrique au véhicule. Cette charge électrique, qui est toujours gênante, présente de plus un inconvénient majeur dans certaines applications, comme les opérations de sauvetage, car elle se traduit par une différence de potentiel entre le sauveteur et le rescapé qui peut atteindre des centaines de kilovolts.

Le sauvetage peut intervenir en tous points de la surface terrestre, c'est-à-dire en mer aussi bien qu'à flanc de falaise ou en montagne. Pour effectuer un tel sauvetage, l'hélicoptère est muni d'un dispositif composé essentiellement d'un treuil autour duquel un câble est enroulé. Le sauveteur est attaché par un harnais à l'extrémité de ce câble, qui est métallique en règle générale, pour des raisons tenant à la résistance des matériaux. On actionne le treuil pour dérouler le câble et faire descendre le sauveteur auprès du rescapé ; le sauveteur passe un second harnais autour du corps de celui-ci, et l'on actionne de nouveau le treuil pour enrouler le câble et ramener les deux hommes à bord de l'hélicoptère.

Bien que la consigne au cours de ces opérations soit de mettre l'extrémité du câble métallique en contact avec la mer ou la terre pour permettre aux charges électriques de l'hélicoptère de s'écouler vers le sol préalablement au contact avec le rescapé, cette manœuvre n'est pas toujours rendue possible par les conditions atmosphériques ou par la nature du terrain : le balancement du câble avec sa charge, les vagues, les irrégularités du relief, etc., peuvent empêcher un contact suffisant. Par ailleurs, l'utilisation d'un deuxième câble ou fil conducteur entre l'hélicoptère et la surface terrestre est absolument proscrite pour des raisons de sécurité : on craint en effet que le vent ne rabatte ce câble vers le rotor, ce qui pourrait entraîner un accident grave. Dans ces conditions, à la fois le sauveteur et le rescapé peuvent, juste avant de se rejoindre, subir un choc électrique extrêmement violent à la suite de l'amorçage d'une étincelle entre véhicule et terre, car le trajet du courant correspondant passe par le corps des deux hommes. Cette situation est très fréquente en particulier pour les équipages d'hélicoptères affectés au sauvetage, au transport des malades et au ravitaillement des installations pétrolières de la Mer du Nord.

C'est pour cette raison que l'on cherche à décharger électriquement les hélicoptères grâce à un dispositif d'asservissement destiné à maintenir à zéro la valeur de leur potentiel électrique. Les dispositifs de ce genre qui sont connus jusqu'à présent n'ont pas donné entière satisfaction.

En effet, une difficulté majeure que l'on rencontre lors de la conception d'un tel dispositif est la mesure du potentiel de l'hélicoptère. Pour les raisons qui ont été exposées plus haut, cette mesure doit se faire sans contact avec le sol (si on pouvait établir un contact, on n'aurait plus besoin du système puisque le potentiel de l'hélicoptère s'annulerait de lui-même). On utilise donc des mesureurs de champ du type moulin à champ, par exemple, montés sur la structure de l'hélicoptère (FR-A-2 025 145 et US-A-3 874 616).

Cependant, la littérature technique montre que la mesure effectuée ainsi est entachée d'une erreur inadmissible, dès lors que l'espace entourant le véhicule comprend des particules électrisées en suspension : or, il en est toujours ainsi lorsque l'hélicoptère vole dans des conditions qui provoquent la formation d'une charge électrique sur sa structure ; l'air est alors chargé d'embruns, de sable ou d'aérosol de glace fortement chargés. Dans ces conditions, en injectant la mesure ainsi entachée d'erreur à l'entrée de la chaîne d'asservissement destinée à décharger l'hélicoptère, non seulement on ne peut habituellement réduire le potentiel du véhicule au-dessous de la centaine de kilovolts, mais encore on peut, dans certains cas, l'augmenter.

C'est la raison pour laquelle on a récemment vu paraître dans la littérature technique des projets visant à tenir compte par le calcul de la charge électrique d'espace autour de l'hélicoptère pour déterminer le potentiel de ce véhicule. La charge d'espace est supposée uniforme ; sa valeur est déterminée par un prélèvement effectué, par exemple, grâce à un capteur approprié ; un micro-ordinateur embarqué est chargé de fournir la valeur du potentiel de l'hélicoptère à partir de la mesure effectuée par les moulins à champ, et par celle de la sonde de mesure de la charge d'espace. Un tel dispositif est décrit dans l'article de O. Tranbarger et B.M. Duff, International Aerospace and Ground Conference on Lightning and Static Electricity, 31, pages 1-34, 21-23 Juin 1983, Fort Worth, Texas, Etats-Unis.

Cette technique est imparfaite car la distribution de la charge d'espace n'a aucune raison d'être uniforme dans l'écoulement turbulent autour du véhicule. En conséquence, il apparaît pratiquement impossible par ce procédé de réduire le potentiel de l'hélicoptère au-dessous de plusieurs dizaines de kilovolts. On note par ailleurs que ce procédé est lourd, puisqu'il nécessite à la fois une mesure délicate de charges d'espace, et la disposition d'un micro-ordinateur.

Dans l'état actuel de l'art, il est donc impossible d'assurer un sauvetage en mer par hélicoptère sans exposer, dès que la mer est agitée, sauveteur et rescapé à un choc électrique dangereux. Plus généralement, il en est de même pour l'ensemble des opérations de sauvetage sur la surface terrestre. Plus généralement encore, le potentiel résiduel peut gêner de nombreux types d'opérations de levage effectuées par hélicoptère.

La présente invention a essentiellement pour but de résoudre ce problème, en permettant une réduction de la différence de potentiel hélicoptère-terre à quelques volts, ce qui élimine de façon pratiquement totale les risques de choc électrique.

Le procédé proposé est défini par les caractéristiques de la revendication 1.

Le bon fonctionnement de ce procédé peut être expliqué à partir des remarques suivantes, qui sont formulées dans le cadre de l'application préférentielle au sauvetage d'un rescapé :

— Le potentiel que l'on doit annuler entre hélicoptère et terre s'applique intégralement entre sauveteur et rescapé ; c'est d'ailleurs la raison précise du danger à éviter. Or, au fur et à mesure que le sauveteur se rapproche du rescapé, il y a de moins en moins de charges électriques dans l'espace qui les sépare. Ceci est vrai même si la densité de charges par unité de volume dans l'espace qui sépare les deux hommes ne décroît pas au cours de ce rapprochement, car ce volume (et donc la charge totale qu'il renferme) décroît au cours du rapprochement. La détermination du potentiel de l'hélicoptère est donc bien meilleure lorsqu'on l'effectue par une mesure du champ électrique entre sauveteur et terre ou entre sauveteur et rescapé que lorsqu'on l'effectue au niveau de l'hélicoptère.

— Au fur et à mesure que la distance entre sauveteur et rescapé diminue, le champ électrique provoqué par une différence de potentiel donnée entre les deux augmente : ainsi, au fur et à mesure que le danger d'étincelle s'accroît, la sensibilité de la mesure du champ électrique s'accroît également, ce qui facilite l'annulation du potentiel par la chaîne d'asservissement, et ce au moment où il est le plus impératif de l'annuler. La limitation en précision de cette annulation, c'est-à-dire le potentiel résiduel sur l'hélicoptère, résulte du fait qu'il existera toujours une différence de potentiel de contact de quelques volts entre la surface sensible de l'appareil de mesure porté par le sauveteur et la surface en regard du corps ou des vêtements du rescapé. Une telle différence de potentiel est entre 1 000 et 10 000 fois plus faible que celle que l'on pourrait obtenir par les meilleurs moyens décrits dans les littératures, ce qui procure un avantage considérable.

La présente invention prévoit aussi un dispositif permettant la mise en œuvre du procédé ci-dessus, tel que défini par les caractéristiques de la revendication 7.

La déperdition active de charges électriques peut être mise en œuvre à bord de l'hélicoptère lui-même ; il est alors prévu une liaison de transmission de la grandeur électrique (le champ électrique) entre le fardeau ou sauveteur et l'hélicoptère.

Dans une variante, la déperdition active de charges est mise en œuvre au niveau du fardeau, et orientée à l'opposé du point visé, sur la surface terrestre. C'est-à-dire qu'autant que possible, le sauveteur descend à côté du rescapé, et la déperdition de charges électriques est effectuée à l'opposé du rescapé par rapport au sauveteur, tout en demeurant orientée vers la surface terrestre.

D'autres caractéristiques et avantages de l'invention apparaîtront à l'examen de la description détaillée qui va suivre, et des dessins annexés, sur lesquels :

— la figure 1 illustre schématiquement le dispositif de l'invention, dans l'application au sauvetage par hélicoptère ;

— la figure 2 est un schéma électrique de principe du dispositif utilisé sur la figure 1 ;

— les figures 3 à 7 illustrent différents modes de réalisation du détecteur de champ électrique ; et

— la figure 7A illustre un détail du détecteur de la figure 7.

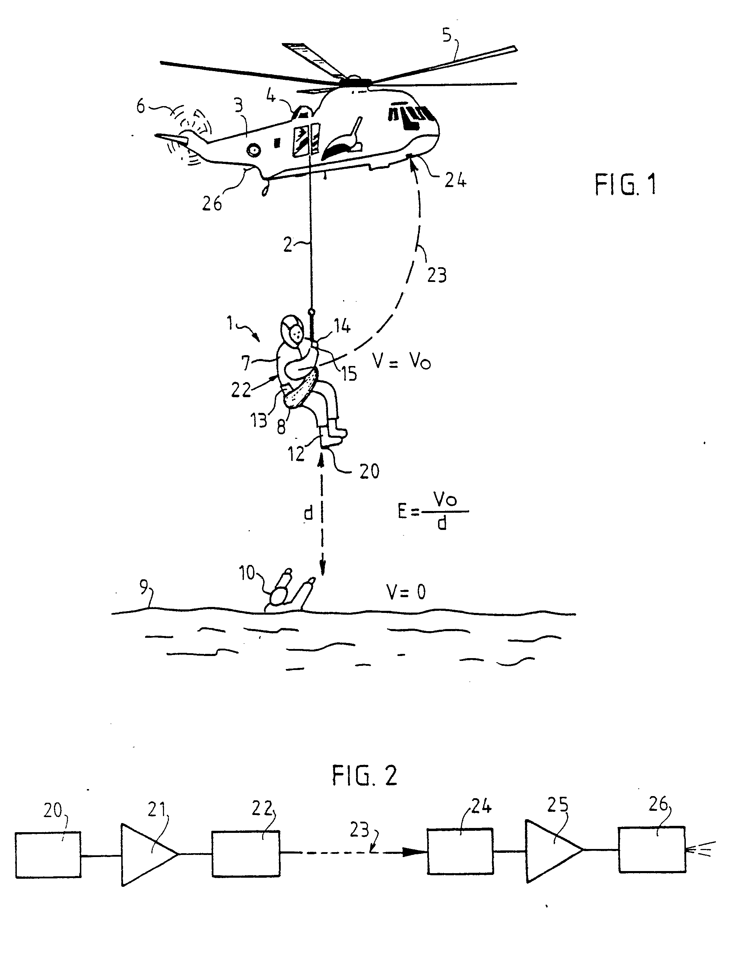

Sur la figure 1, un sauveteur 1 est suspendu par un harnais 8 à l'extrémité d'un câble 2 enroulé sur le treuil 4 d'un hélicoptère 3. On reconnaît le rotor principal 5 et le rotor de queue 6 de l'hélicoptère. Le sauveteur porte un vêtement spécial, constitué d'une combinaison 7, de chaussures telles que 12, et de gants tels que 14. Il descend vers un rescapé 10, qui est ici un naufragé sur la surface 9 de la mer, porté le cas échéant par un esquif (non représenté).

Il est maintenant fait référence aux figures 1 et 2. Un détecteur de champ électrique 20 est porté par exemple par l'une des chaussures 12 du sauveteur. Il est associé à un amplificateur 21, et relié à un émetteur radio-électrique 22, placé par exemple dans la poche 13 du sauveteur 1. L'ensemble est alimenté par une batterie miniaturisée. La liaison radio-électrique 23 aboutit à un récepteur radio-électrique 24, monté sur l'hélicoptère, et relié par l'intermédiaire d'un amplificateur convenable 25 à un déperditeur actif de charges électriques 26. La masse du détecteur 20 est reliée au câble 2, lequel est connecté électriquement à la structure ou masse de l'hélicoptère.

On note $V = V_0$ le potentiel auquel se trouve l'ensemble hélicoptère 3, câble 2 et sauveteur 1. La surface terrestre 9 est en principe au potentiel de référence $V = 0$. On note d la distance à un instant donné entre le sauveteur 1 et le rescapé 10. Il existe entre le sauveteur et le rescapé un champ électrique $E = V_0/d$ (dans la mesure où ce champ est uniforme).

Tant que le sauveteur est assez loin du rescapé, ce champ électrique E peut n'être pas uniforme du sauveteur au rescapé, en raison de la présence de charges électriques d'espace dans cette zone. Il n'obéit alors plus à la relation ci-dessus, et ne représente donc qu'imparfaitement la différence de potentiel entre l'hélicoptère et la terre. Au cours du rapprochement entre le sauveteur et le rescapé, les perturbations du champ électrique ont naturellement tendance à diminuer.

Par ailleurs, on observe que la sensibilité de la grandeur champ électrique, en tant que représentation du potentiel, tend à augmenter lorsque sauveteur et rescapé se rapprochent, puisqu'alors 1/d augmente.

Il s'avère ainsi que lorsque le sauveteur se rapproche du rescapé, la prise en compte, dans la boucle de mesure, du champ électrique comme grandeur proportionnelle à la différence de potentiel, se révèle de plus en plus commode (car la sensibilité augmente) et de plus en plus exacte (car la relation de proportionnalité est de mieux en mieux respectée).

On décrira maintenant différents modes de réalisation du détecteur 20.

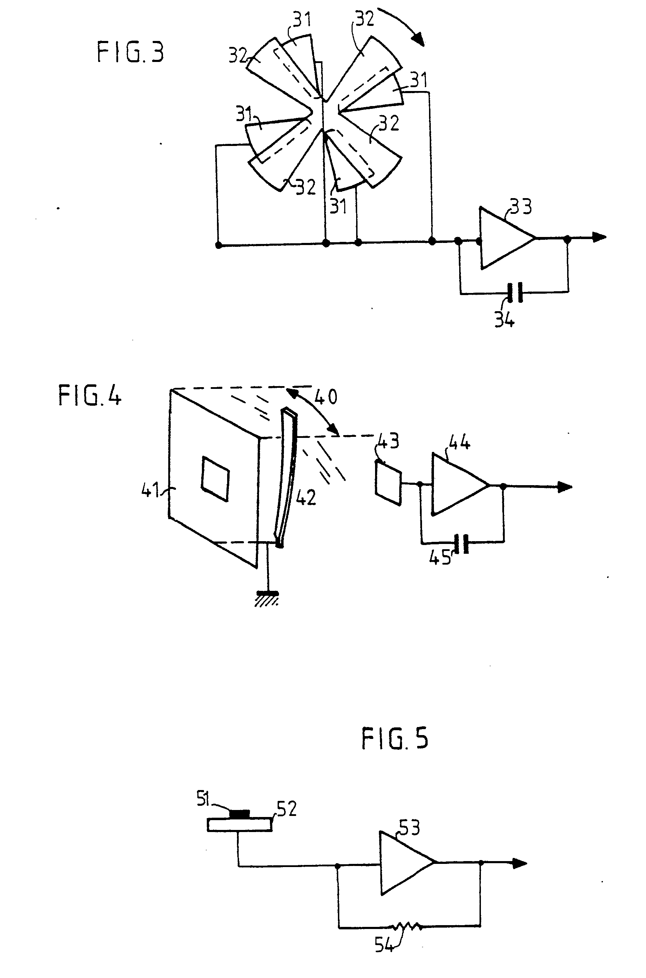

La figure 3 fait apparaître un détecteur de champ électrique du type dit « moulin à champ ». Ce moulin comporte une électrode fixe, de mesure, 31, et une électrode mobile ou écran 32, qui vient masquer et démasquer périodiquement des parties de l'électrode de mesure, par rapport à la zone dans laquelle on désire détecter le champ électrique. L'électrode 31 est reliée à un amplificateur de charges électriques ou intégrateur, schématisé par un amplificateur opérationnel 33 muni en parallèle d'un condensateur 34. La grandeur de sortie de l'amplificateur est proportionnelle à la différence de potentiel à mesurer, c'est-à-dire ici à la différence du potentiel entre l'hélicoptère et la terre, telle que déterminée à partir du champ électrique au voisinage du sauveteur.

Sur la figure 3, le moulin à champ est schématisé par quatre électrodes fixes 31 reliées individuellement à l'entrée de l'amplificateur 33, tandis que l'électrode mobile est une croix de Malte qui tourne sur elle-même pour masquer et démasquer chacune de ces électrodes, alternativement. Une version perfectionnée d'un moulin à champ a été décrite dans le Brevet FR-A-2 476 849 déposé le 22 Février 1980, au nom du Demandeur. Le volume occupé par un moulin à champ peut être rendu inférieur au litre, et sa masse inférieure au kilogramme, ce qui permet de l'adjoindre aisément à l'équipement d'un sauveteur, ou à d'autres types de charges suspendues.

La figure 4 illustre une variante du moulin à champ, que l'on appelle souvent capteur électrostatique à vibreur. Un écran 41 possède en son centre une ouverture. Derrière cette ouverture est placée une lame 42 qui vibre latéralement dans son plan, de la manière alternée indiquée par la flèche 40. Cette tige 42 réalise donc là encore un masquage et démasquage alternés de l'ouverture, par rapport à une électrode sensible 43, qui se trouve alors reliée à l'amplificateur de charge à condensateur 45. Ce dispositif, qui est un peu moins sensible que le moulin à champ de la figure 3, car sa surface d'électrode est plus faible, présente l'avantage de posséder un volume encore plus réduit. On peut alors adjoindre un tel dispositif à la chaussure 12 du sauveteur, ou le monter sur son gant 14, ou le lui faire porter par le poignet 15, ou encore l'adjoindre à son harnais 8.

La figure 5 illustre le principe d'un autre détecteur, fondé sur une pastille radioactive 51, supportée par une électrode de mesure 52 reliée à l'entrée d'un amplificateur de courant schématisé par un amplificateur opérationnel 53 muni d'une résistance de contre-réaction 54. Le courant mesuré est directement proportionnel au champ superficiel. Il faut bien entendu en tenir compte dans l'asservissement, afin que celui-ci réponde au potentiel.

Ce type de capteur présente l'avantage d'une grande simplicité. Il souffre par contre de plusieurs inconvénients, qui sont la faiblesse de sa dynamique, car il se sature en effet à partir d'un champ de quelques kilovolts par mètre alors que les champs à mesurer sont plus forts. Par ailleurs, son fonctionnement peut être perturbé par un dépôt de matière quelconque sur la surface de la pastille radioactive : embruns, sable, etc.

Pour la mise en œuvre de la présente invention, un tel détecteur ne peut donc servir qu'à la condition d'en réduire le champ superficiel par des écrans électrostatiques, afin d'éviter la saturation, et aussi de le protéger de tout dépôt de matière sur sa surface. Dans ces conditions, on arrive à un volume comparable à celui mentionné plus haut à propos de la figure 4.

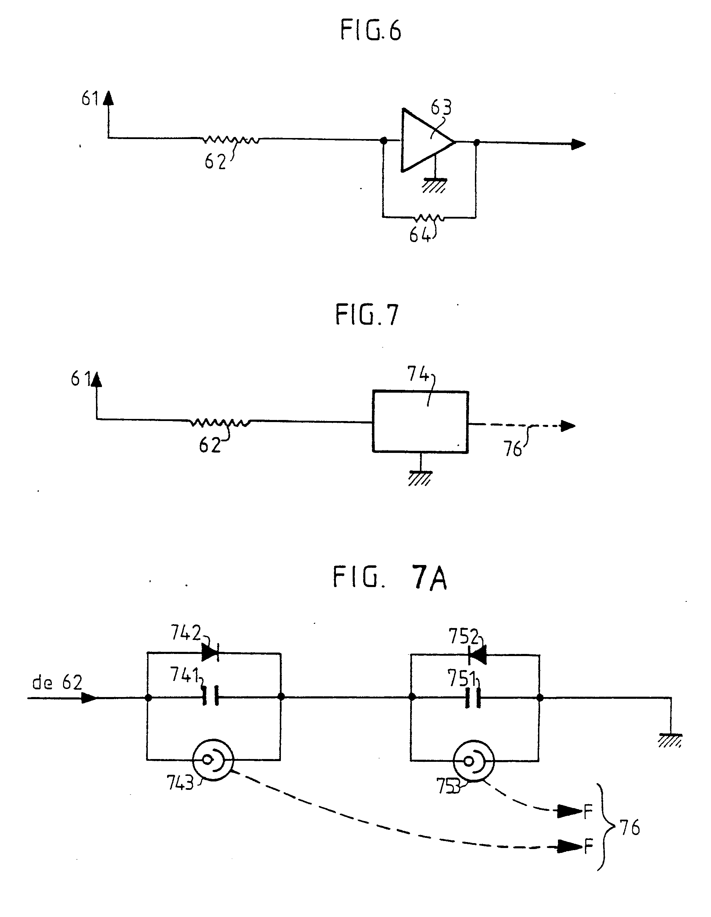

Les figures 6 et 7 illustrent deux variantes d'une quatrième version du détecteur de champ électrique.

Sur la figure 6, une pointe métallique 61 est constituée par l'extrémité d'une tige de quelques dixièmes de millimètre de diamètre. Cette pointe est mise en série avec une résistance 62 de quelques dizaines de mégohms. On obtient alors un courant sensiblement proportionnel au champ électrique ambiant, donc à la différence de potentiel cherchée (compte tenu de la distance). Ce courant peut être utilisé dans un amplificateur de courant 63 à résistance de contre-réaction 64, comme c'est illustré sur la figure 6.

La variante de la figure 7 remplace l'amplificateur de courant par un organe 74 qui peut être un convertisseur électro-optique ou un numériseur impulsionnel, qui peut servir de point de départ à de nombreux types de liaisons 76, dont celles par fibres optiques.

Le numériseur impulsionnel peut être de type connu. Le convertisseur électro-optique est schématisé sur la figure 7A. La sortie de la résistance 62 est appliquée à deux circuits série comportant chacun un condensateur 741, 751 respectivement, en parallèle sur un tube au néon 743, 753, respectivement. Les deux circuits comportent aussi des diodes 742 et 752, qui sont montées en sens inverse. Ils sont donc associés chacun à l'une respective des polarités du courant à mesurer. De chacun des tubes au néon 743 et 753 partent enfin des fibres optiques F formant la liaison 76, qui est donc une version à fibres optiques de la liaison 23 de la figure 2.

Des dispositifs de ce genre, pour la transmission d'impulsions, ont été décrits par le Demandeur dans le Brevet FR-A-2 388 279 déposé le 19 Avril 1977.

Un tel dispositif à pointe Corona peut être rendu très léger (moins de 100 grammes) et occuper un volume de 100 cm$^3$. Il est naturellement possible d'utiliser plusieurs pointes métalliques, ou encore, au lieu de pointes métalliques, un ensemble de fibres conductrices telles que des fibres de carbone, qui peuvent être moulés dans une résine pour former une baguette de matériau composite, ou encore un faisceau de fils en polymère ou en caoutchouc à haute résistivité.

Bien entendu, on peut utiliser une combinaison des moyens ci-dessus, afin d'augmenter la sécurité de fonctionnement du dispositif de mesure par une utilisation d'une redonnance dissemblable.

Le signal obtenu avec les détecteurs du type ci-dessus est proportionnel à la grandeur annulée. La chaîne d'asservissement décrite à propos de la figure 2 permet une commande en conséquence de l'action du dispositif déperditeur actif qui pourra faire varier le potentiel de l'ensemble hélicoptère-câble-sauveteur.

De tels déperditeurs actifs ont été décrits dans la littérature. Ils comportent un éjecteur de charges électriques positives ou négatives, soit à partir de deux unités consacrées chacune à l'une des polarités des charges, soit à partir d'une unité unique capable d'émettre au choix des charges des deux polarités.

Une première version du déperditeur actif utilise comme charges des ions, qui sont émis à partir d'une pointe Corona portée à plusieurs centaines de kilovolts positifs ou négatifs.

Dans une seconde version, ces charges sont des aérosols d'eau ou de glace émis par un jet supersonique d'air humide. La tuyère d'émission comporte à son col une pointe métallique axiale portée à une tension de 5 à 10 kilovolts. Un tel dispositif est capable d'émettre un courant d'environ 100 microampère positif ou négatif. Il a été décrit dans le Brevet FR-A-2 419 647 déposé le 10 Mars 1978 au nom du Demandeur. Des dispositifs du même genre sont décrits dans l'article de S. Larigaldie, N. Felici intitulé « Experimental Study of a Static Discharger for Aircraft with Special Reference to Helicopter » Journal of Electrostatics, 9, 1980, 59-70.

Pour annuler la différence de potentiel hélicoptère-terre, il suffit de faire varier par l'asservissement le courant émis par le déperditeur actif jusqu'à annulation du signal fourni par le détecteur de champ électrique. Une telle opération peut être effectuée automatiquement par l'asservissement du type décrit. Il a déjà été relevé que le champ électrique convient particulièrement bien pour réaliser de façon convenable cet asservissement, puisque la grandeur d'entrée augmente et qu'elle est bien proportionnelle au potentiel lorsque le sauveteur se rapproche du rescapé.

On peut envisager de placer le déperditeur de charges au niveau même du sauveteur. Toutefois, le Demandeur considère actuellement comme préférable qu'il soit placé à bord de l'hélicoptère, pour des raisons pratiques.

La liaison de transmission entre le sauveteur et l'hélicoptère peut alors être soit :

— Une liaison radio-électrique, comme précédemment mentionné, soit une liaison optique, par fibres optiques, qui peut alors être logée dans l'âme du câble porteur.

— Une liaison électrique peut aussi être assurée par le câble porteur lui-même, à condition que le treuil sur lequel il s'enroule soit isolé de la masse de l'hélicoptère. Cette disposition est particulièrement favorable dans le cas où le détecteur utilise une décharge Corona, mais elle peut aussi s'appliquer dans le cas de transmissions à haute fréquence, ou de transmissions d'impulsions analogues à celles qui sont produites par l'amorçage de tubes au néon conformément au Brevet FR-A-2 388 279 précité.

Dans ce mode de réalisation particulier le courant Corona charge un condensateur qui se décharge dans un tube au néon dès que la tension à ses bornes atteint une valeur caractéristique, à la manière d'un circuit relaxateur. L'impulsion obtenue peut être exploitée optiquement à l'aide d'une fibre optique ou électriquement à l'aide d'une liaison conductrice. La distinction entre les courants positif et négatif est immédiate pour la liaison électrique car le signe des impulsions en dépend.

Si, comme illustré sur la figure 7A, l'on souhaite utiliser la lumière émise par le néon, il faut par contre employer le montage à deux condensateurs en série court-circuités par des diodes montées en opposition, comme illustré, pour qu'à chaque polarité un seul des relaxateurs fonctionne.

Lorsque l'éjection des charges se fait au niveau du sauveteur, on place le déperditeur actif au voisinage immédiat de l'extrémité basse du câble porteur, et on l'oriente à l'opposé de la direction de la détection du champ électrique, de façon à ne pas perturber la mesure, et autant que possible vers le bas, de façon à obtenir la plus grande efficacité de l'éjection de charges, celle-ci s'effectuant alors vers la référence de potentiel.

Dans un exemple particulier de mise en œuvre de l'invention, on munit le sauveteur 1 de vêtements conducteurs, c'est-à-dire dont la trame contient du fil métallique le long de certaines lignes courant de haut en bas, avec un contact bien établi avec les chaussures 12. Ces fils conducteurs possèdent de préférence une résistance inférieure à 1 Mégohm. Une des chaussures 12 contient dans son talon un mesureur de champ électrique du type capteur à électrode vibrante (figure 4). Une liaison électrique montée dans le vêtement relie ce capteur de champ électrique à un émetteur radio-électrique 22 placé dans la poche 13. La liaison électrique aboutit en 24 à bord de l'hélicoptère, et sert à la commande d'un déperditeur actif 26 qui est du genre décrit dans le Brevet FR-A-2 419 647 déjà cité.

Il a été observé que les performances du capteur du type moulin à champ, ou de son homologue à vibreur, sont limitées, pour les très petites distances, par les différences de potentiel de contact qui sont de l'ordre du volt. Lorsque la distance sauveteur-rescapé diminue, la précision de la mesure du champ est limitée, avant le contact, par une incertitude sur le potentiel de l'ordre du volt. Il subsiste donc au moment du contact une différence de potentiel entre sauveteur et rescapé de l'ordre du volt. Cette différence de potentiel est négligeable par rapport aux dizaines, voire centaines de kilovolts observés en l'absence de protection. Il apparaît ainsi que la présente invention offre une solution tout à fait efficace au problème posé.

## Revendications

1. Procédé de levage d'une charge à l'aide d'un hélicoptère, selon lequel on suspend un fardeau (1) à l'extrémité d'un câble conducteur (2), électriquement relié à la masse de l'hélicoptère (4), et descendant vers la surface terrestre (9), on mesure une grandeur électrique liée à la différence de potentiel entre l'hélicoptère et la surface terrestre (9), et on met en œuvre une déperdition active (26) de charges électriques, cette déperdition étant asservie (21-25) en fonction de ladite grandeur électrique dans le sens tendant à réduire ladite différence de potentiel, et selon lequel on mesure, à l'aide d'un détecteur situé au niveau du fardeau (1), le champ électrique régnant au voisinage du fardeau, dans la direction de la surface terrestre, une liaison de transmission (23) de la mesure de champ électrique étant établie entre le fardeau et l'organe d'asservissement de la déperdition active de charges électriques.

2. Procédé selon la revendication 1, caractérisé en ce que le champ électrique est mesuré à l'aide d'une électrode auxiliaire (31, 43, 53, 61) voisine du fardeau.

3. Procédé selon l'une des revendications 1 à 3, caractérisé en ce que la déperdition active de charges (20) est mise en œuvre au niveau du fardeau et orientée à l'opposé du point visé, sur la surface terrestre.

4. Procédé selon l'une des revendications précédentes, caractérisé en ce que le fardeau (1) est un homme, tel qu'un sauveteur, suspendu par un harnais (8) à l'extrémité du câble, et cherchant à relever, à l'aide d'un second harnais également suspendu, un rescapé ou un blessé (10).

5. Procédé selon la revendication 4, caractérisé en ce que le sauveteur (1) porte un vêtement tramé de fils conducteurs, mis en série entre le câble et la masse du détecteur de champ électrique (20).

6. Procédé selon l'une des revendications 4 et 5, caractérisé en ce que le sauveteur porte extérieurement le détecteur (20) de champ électrique, en particulier sur une chaussure (12), un gant (14) à son poignet (15) ou sur son harnais (8).

7. Dispositif permettant la mise en œuvre du procédé selon l'une des revendications précédentes, à partir d'un hélicoptère (3) muni d'un treuil (4) sur lequel est enroulé un câble conducteur (2) relié à la masse de l'hélicoptère et supportant un fardeau tel qu'un sauveteur (1) qui descend vers la surface terrestre (9), tandis qu'il est prévu un déperditeur actif (26) de charges électriques, ainsi qu'un asservissement (21-25) de la déperdition de charges en fonction d'une grandeur électrique détectée, dans le sens tendant à diminuer celle-ci, dispositif dans lequel le fardeau (1) est muni d'un détecteur (20) de champ électrique tourné vers la surface terrestre, une liaison de transmission (21, 22, 23, 24) de cette mesure de champ électrique étant prévue entre le détecteur (20) du fardeau (1) et l'organe d'asservissement (25) du déperditeur actif de charges électriques (26), ce qui permet d'annuler sensiblement la différence de potentiel qui règne entre le fardeau et la surface terrestre lorsqu'ils se rapprochent l'un de l'autre.

8. Dispositif selon la revendication 7, caractérisé en ce que le détecteur (20) de champ électrique comprend un moulin à champ miniaturisé (31-34) ou un capteur électrostatique à vibreur (41-45).

9. Dispositif selon l'une des revendications 7 et 8, caractérisé en ce que le détecteur de champ électrique (20) comprend l'un au moins des capteurs de groupe constitué par les mesureurs de champ électrique à source radioactive (51-54) et les mesureurs de champ électrique à décharge Corona sur une pointe (61) ou un faisceau de fibres conductrices, en série sur une résistance de très forte valeur (62), et détection (63, 64 ; 74) du courant Corona.

10. Dispositif selon l'une des revendications 7 à 9, caractérisé en ce que la déperdition active de charges (26) est mise en œuvre à bord de l'hélicoptère lui-même et en ce que la liaison de transmission (25) de la grandeur électrique est établie entre le fardeau (1) et l'hélicoptère (3), de préférence par voie radio-électrique ou par fibres optiques.

11. Dispositif selon l'une des revendications 7 à 9, caractérisé en ce que la déperdition active de charges est mise en œuvre au niveau du fardeau, et orientée à l'opposé du point visé, sur la surface terrestre.

## Claims

1. A method of raising a load by means of a helicopter, in accordance with which a weight (1) is hung at the end of a conductive cable (2) electrically connected to the mass of the helicopter (4) and while descending towards the surface (9) of the earth an electrical quantity is measured which is tied to the difference in potential between the helicopter and the surface (9) of the earth, and an active dissipation (26) of electrical charges is put into effect, this dissipation being brought under control (21-25) as a function of the said electrical quantity in the direction tending to reduce the said difference in potential, and in accordance with which by means of a detector situated at the level of the weight (1) the electric field is measured which prevails in the vicinity of the weight in the direction of the surface of the earth, a connection for transmission (23) of the measurement of electric field being established between the weight and the member for bringing under control the active dissipation of electrical charges.

2. A method as in Claim 1, characterized in that the electric field is measured by means of an auxiliary electrode (31, 43, 53, 61) next to the weight.

3. A method as in one of the Claims 1 to 3, characterized in that the active dissipation of charges (20) is put into effect at the level of the weight and aligned in the direction opposite to the point of aim on the surface of the earth.

4. A method as in one of the preceding Claims, characterized in that the weight is a man such as a rescuer hung by a harness (8) at the end of the cable and trying to raise by means of a second harness likewise suspended someone being rescued or who is wounded (10).

5. A method as in Claim 4, characterized in that the rescuer (1) wears a garment woven from conductive threads placed in series between the cable and the mass of the electric field detector (20).

6. A method as in one of the Claims 4 and 5, characterized in that the rescuer wears the electric field detector (20) externally, in particular over footwear (12), a glove (14) at his wrist (15) or over his harness (8).

7. A device enabling the implementation of the method as in one of the preceding Claims, from a helicopter (3) equipped with a winch (4) over which is wound a conductive cable (2) connected to the mass of the helicopter and supporting a weight such as a rescuer (1) who descends towards the surface (9) of the earth, whilst an active dissipator (26) of electrical charges is provided as well a bringing under control (21-25) of the dissipation of charges as a function of a detected electrical quantity in the direction to reduce the latter, being a device in which the weight (1) is equipped with an electric field detector (20) turned towards the surface of the earth, a connection (21, 22, 23, 24) for transmission of this electric field measurement being provided between the detector (20) on the weight (1) and the member for bringing under control (25) the active dissipator of electrical charges (26), which enables the difference in potential which prevails between the weight and the surface of the earth to be substantially annuled when they approach one another.

8. A device as in Claim 7, characterized in that the electric field detector (20) comprises a miniaturized field mill (31-34) or a vibratory electrostatic pick-up (41-45).

9. A device as in one of the Claims 7 and 8, characterized in that the electric field detector (20) comprises at least one of the pick-ups of the group consisting of the radioactive-source electric field measurers and the point-corona-discharge electric field measurers (61) or a bundle of conductive fibres in series across a resistance of very high value (62), and detection (63, 64 ; 74) of the corona current.

10. A device as in one of the Claims 7 to 9, characterized in that the active dissipation of charges (26) is put into effect on board the helicopter itself and in that the connection (25) for transmission of the electrical quantity is established between the weight (1) and the helicopter (3), preferably by radioelectric means or through optical fibres.

11. A device as in one of the Claims 7 to 9, characterized in that the active dissipation of charges is put into effect at the level of the weight and directed in the direction opposite from the point of aim on the surface of the earth.

**Patentansprüche**

1. Verfahren zum Anheben eines Objekts mit Hilfe eines Hubschraubers, nach welchem eine Last (1) am Ende eines elektrisch leitenden Kabels (2) aufgehängt wird, das mit der Masse des Hubschraubers (4) elektrisch verbunden ist und zur Erdoberfläche (9) hinabgelassen wird, nach welchem ferner eine mit dem Potentialunterschied zwischen dem Hubschrauber und der Erdoberfläche (9) verbundene elektrische Größe gemessen wird und nach welchem eine aktive Ableitung (26) von elektrischen Ladungen durchgeführt wird, wobei diese Ableitung in Abhängigkeit von der genannten elektrischen Größe im Sinne der Herabsetzung des genannten Potentialunterschieds gesteuert wird (21 bis 25), und nach welchem mit Hilfe eines in der Höhe der Last (1) befindlichen Detektors das in der Nähe der Last in Richtung auf den Erdboden bestehende elektrische Feld gemessen wird, wobei eine Übertragungsverbindung (23) der Messung des elektrischen Feldes zwischen der Last und dem Steuerorgan für die aktive Ableitung von elektrischen Ladungen besteht.

2. Verfahren nach Anspruch 1, dadurch gekennzeichnet, daß das elektrische Feld mittels einer Hilfselektrode (31, 43, 53, 61) in der Nähe der Last gemessen wird.

3. Verfahren nach einem der Patentansprüche 1 bis 3, dadurch gekennzeichnet, daß die aktive Ableitung von Ladungen (20) in der Höhe der Last vorgenommen wird und auf den Zielpunkt auf der Erdoberfläche gerichtet ist.

4. Verfahren nach einem der vorhergehenden Ansprüche, dadurch gekennzeichnet, daß die Last (1) ein Mensch, z. B. ein Retter ist, der in einem Sicherheitsgeschirr (8) am Ende des Kabels hängt und versucht, mit einem ebenfalls angehängten Geschirr einen Überlebenden oder einen Verletzten (10) aufzuheben.

5. Verfahren nach Anspruch 4, dadurch gekennzeichnet, daß der Retter (1) eine mit elektrisch leitenden Fäden durchschossene Bekleidung trägt, die elektrisch in Reihe zwischen das Kabel und die Masse des Detektors (20) für das elektrische Feld geschaltet ist.

6. Verfahren nach einem der Ansprüche 4 und 5, dadurch gekennzeichnet, daß der Retter den Detektor (20) für das elektrische Feld an seiner Außenseite trägt, insbesondere an einem Schuh (12), einem Handschuh (14) an seinem Handgelenk (15) oder an seinem Sicherheitsgeschirr (8).

7. Vorrichtung zur Ausübung des Verfahrens nach einem der vorhergehenden Ansprüche, ausgehend von einem Hubschrauber (3), der mit einer Winde (4) ausgestattet ist, auf die ein elektrisch leitendes Kabel (2) aufgewickelt ist, das an die Masse des Hubschraubers angeschlossen ist und eine Last trägt, z. B. einen Retter (1), der zur Erdoberfläche abgelassen wird, während ein aktiver Ableiter (26) für elektrische Ladungen sowie eine Steuerung (21 bis 25) der Ableitung von Ladungen in Abhängigkeit von einer nachgewiesenen elektrischen Größe im Sinne einer Verkleinerung dieser Größe vorgesehen ist, bei welcher Vorrichtung die Last (1) mit einem zur Erdoberfläche hin gerichteten Detektor (20) für das elektrische Feld ausgestattet ist, wobei eine Übertragungsverbindung (21, 22, 23, 24) für diese Messung des elektrischen Feldes zwischen dem Detektor (20) der Last (1) und dem Steuerorgan (25) der aktiven Ableitung von elektrischen Ladungen (26) vorgesehen ist, wodurch der zwischen der Last und der Erdoberfläche bestehende Potentialunterschied im wesentlichen auf Null gebracht werden kann, wenn die Last sich der Erdoberfläche nähert.

8. Vorrichtung nach Anspruch 7, dadurch gekennzeichnet, daß der Detektor (20) für das elektrische Feld eine miniaturisierte Feldmühle (31 bis 34) oder einen elektrostatischen Schwingungsfühler (41 bis 45) enthält.

9. Vorrichtung nach einem der Ansprüche 7 und 8, dadurch gekennzeichnet, daß der Detektor (20) für das elektrische Feld mindestens einen der Meßfühler aus der Gruppe der Feldmeßgeräte mit radioaktiver Quelle (51 bis 54) und der Meßgeräte zur Messung des elektrischen Feldes mit Coronaentladung an einer Spitze (61) oder einem Bündel elektrisch leitender Fasern in Reihe mit einem sehr hohen Widerstand (62) und Erfassung (63, 64 ; 74) des Coronastroms umfaßt.

10. Vorrichtung nach einem der Ansprüche 7 bis 9, dadurch gekennzeichnet, daß die aktive Ableitung von Ladungen (26) an Bord des Hubschraubers selbst durchgeführt wird, und daß die Übertragungsverbindung (25) für die elektrische Größe zwischen der Last (1) und dem Hubschrauber (3) vorzugsweise eine Verbindung auf radioelektrischem Wege oder durch Faseroptik ist.

11. Vorrichtung nach einem der Ansprüche 7 bis 9, dadurch gekennzeichnet, daß die aktive Ableitung von Ladungen in der Höhe der Last durchgeführt wird und auf den Zielpunkt auf der Erdoberfläche gerichtet ist.

FIG. 1

$V = V_O$

$E = \dfrac{V_O}{d}$

$V = 0$

FIG. 2

FIG.3

FIG.4

FIG.5

## FIG.6

## FIG.7

## FIG. 7A